# EUROPEAN PATENT APPLICATION

(11) **EP 4 603 900 A1**
(43) Date of publication of application: **20.08.2025**
(21) Application number: 24211626.7
(22) Date of filing: 08.11.2024
(51) Int. Cl.: G02F 1/1335, G02F 1/1343, B60J 3/04, B60J 10/50, E06B 5/20, E06B 9/24, G10K 11/178

(54) **VARIABLE TRANSMITTANCE OPTICAL STACK**

(30) Priority: 15.11.2023 KR 20230158292
(71) Applicant: Dongwoo Fine-Chem Co., Ltd., Iksan-si, Jeollabuk-do 54631 (KR)
(72) Inventor: LIM, Geo-San, 54631 Jeollabuk-do (KR); KIM, Dong-Hwi, 54631 Jeollabuk-do (KR)
(74) Representative: Betten & Resch

(57) **Abstract**

A variable transmittance optical stack is proposed. The variable transmittance optical stack includes a light control panel (100), an in-plane vibration unit (200), and a noise control unit (300). The noise control unit includes a noise receiving part (310), a noise analyzing part (320), and a frequency transmitting part (330).

## Description

### CROSS REFERENCE TO RELATED APPLICATION

The present application claims priority to Korean Patent Application No. 10-2023-0158292, filed November 15, 2023, the entire contents of which are incorporated herein for all purposes by this reference.

### BACKGROUND OF THE INVENTION

### Field of the Invention

The present disclosure relates to a variable transmittance optical stack and a method for manufacturing the same, and a smart window including the same.

### Description of the Related Art

In general, there are many cases in which an external light blocking coating is applied to a window of a means of transportation such as a vehicle. However, a transmittance of a conventional window of a means of transportation is fixed, and a transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing the transmittance of light when a voltage is applied has been developed.

In recent years, there has been a growing need for a smart window that includes noise control functions to block external noise from outside a vehicle and/or a building, in addition to light transmission.

In Korean Patent No. 10-2347298, as a shield window with excellent sound blocking and sound proofing performance, a window including a pair of noise-blocking laminated glass and an electromagnetic shielding material provided on an upper end of the laminated glass is disclosed. However, when the window is applied to a structure, it is difficult to control both the light transmittance variability according to voltage application and the soundproofing performance according to noise level.

### Documents of Related Art

(Patent Document 1) Korean Patent No. 10-2347298

### SUMMARY OF THE INVENTION

In order to solve the above-described problems, an objective of the present disclosure is to provide a variable transmittance optical stack using a reverse phase frequency emitted according to external noise, to remove noise by in-plane vibration.

Another objective of the present disclosure is to provide a variable transmittance optical stack having a simplified manufacturing process by including a separate or additional substrate for forming a conductive layer.

Yet another objective of the present disclosure is to provide a smart window including a variable transmittance optical stack, and windows and doors for a vehicle or a building to which the same is applied.

However, the problem to be solved by the present disclosure is not limited to the problems mentioned above, and other problems not mentioned will be clearly understood by those skilled in the art from the description below.

In order to the above-described objectives, the present disclosure relates to a variable transmittance optical stack including a light control panel; an in-plane vibration unit; and a noise control unit, and the noise control unit may include a noise receiving part, a noise analyzing part, and a frequency transmitting part.

According to the present disclosure, the variable transmittance optical stack may be used for removing, controlling, canceling, reducing, and/or blocking external noise, such that noise transmitted through the noise receiving part of the noise control unit may be converted to its frequency in the noise analyzing part, and a reverse phase frequency thereof may be transmitted through the frequency transmitting part to vibrate the in-plane vibration unit and the light control panel to remove noise.

According to the present disclosure, the reverse phase frequency emitted from the frequency transmitting part may range from 500 to 5000 Hz.

According to the present disclosure, the in-plane vibration unit may include at least one type of polymer material selected from polyester (PET), polycarbonate (PC), polyethylenenaphthalate (PEN), polyether ether ketone (PEEK), polypropylene (PP), polymethylpentene (TPX), polyimide (PI), polyetherimide (PEI), liquid crystal polymers (LCP), and polyvinylidene fluoride (PVDF).

According to the present disclosure, the in-plane vibration unit may be arranged at the peripheral part of the light control panel.

According to the present disclosure, the area of the in-plane vibration unit may range from 5 to 30 % of the whole area of the light control panel.

According to the present disclosure, the noise control unit is connected to a power supply part separate from the in-plane vibration unit, and be operated in conjunction with opening and closing of the window to be operated in closing of the window.

According to the present disclosure, the light control panel may include a first polarizing plate; a first transparent conductive layer formed on one surface of the first polarizing plate; a second polarizing plate opposing the first polarizing plate; a second transparent conductive layer formed on one surface of the second polarizing plate and opposing the first transparent conductive layer; and a liquid crystal layer provided between the first transparent conductive layer and the second transparent conductive layer, and at least one of the first and second transparent conductive layers may be formed by directly contacting with one of the first and second polarizing plates.

According to the present disclosure, at least one of the first and second transparent conductive layers may include one or more types selected from a group consisting of transparent conductive oxide, metal, carbonaceous matter, conductive polymers, conductive ink, and nanowires.

According to the present disclosure, at least one of the first and second transparent conductive layers may be formed by directly contacting with one of the first and second polarizing plates without a separate or additional substrate therebetween.

According to the present disclosure, at least one of the first and second transparent conductive layers may be formed by directly contacting with one of the first and second polarizing plates with a highly adhesive layer therebetween.

According to the present disclosure, at least one of the first and second polarizing plates may include one or more types selected from a group consisting of a functional coating layer, the protective layer, a retardation matching layer, and a refractive index-matching layer.

According to the present disclosure, at least one of the first and second polarizing plates has a thickness ranging from 30µm to 200µm.

According to the present disclosure, the light control panel may include one or more types selected from a group consisting of a pressure sensitive adhesive/adhesive layer, an ultraviolet ray absorption layer, and an impact resistance layer.

According to the present disclosure, the liquid crystal layer may include one or more types selected from a group consisting of a ball spacer and a column spacer.

According to the present disclosure, a height of the spacer may range from 1µm to 10µm.

According to the present disclosure, the ball spacer may have an occupancy area in the liquid crystal layer of 0.01 to 10% of the area of the liquid crystal layer.

According to the present disclosure, a sealant and an alignment film may be included at the liquid crystal layer.

The present disclosure relates to a method for manufacturing the variable transmittance optical stack.

The present disclosure relates to a smart window including the variable transmittance optical stack.

The present disclosure relates to a means of transportation including the smart window.

The present disclosure relates to a vehicle in which the smart window is applied to at least one selected from a group consisting of a front window, a rear window, a side window, a sunroof window, and an inner partition.

The present disclosure relates to a wearable device including the smart window.

The present disclosure relates to a window and a door for a building including the smart window.

According to the present disclosure, the variable transmittance optical stack includes the in-plane vibration unit and the noise control unit having a separate power supply part at the light control panel, a light transmittance can be adjusted according to application of a voltage, and external noise can be efficiently removed, controlled, canceled, reduced, and/or blocked.

Furthermore, the variable transmittance optical stack according to the present disclosure can be manufactured without the process of forming a conductive layer on a substrate for the conventional optical stack and bonding the conductive layer and other members, so the manufacturing process thereof can be simplified in comparison to the convention optical stack.

Furthermore, the variable transmittance optical stack according to the present disclosure does not include a separate or additional substrate for forming the conductive layer as the conductive layer is directly formed on one surface of the polarizing plate, so that the thickness thereof may be significantly reduced in comparison to the thickness of the conventional optical stack. Accordingly, when the in-plane vibration unit is applied in the display device including the liquid crystal layer, it can solve the problem of reduced efficiency.

Furthermore, the variable transmittance optical stack according to the present disclosure does not include a separate or additional substrate for forming the conductive layer as the conductive layer is directly formed on one surface of the polarizing plate, so that a transmissive in the transmissive mode may be improved in comparison to the conventional optical stack.

### BRIEF DESCRIPTION OF THE DRAWINGS

FIG. 1 is a schematic diagram illustrating a structure of a variable transmittance optical stack of the present disclosure.
FIGS. 2A to 2C are perspective views illustrating the structure of the variable transmittance optical stack according to various embodiments of the present disclosure.
FIGS. 3 and 4 are sectional views illustrating a stack structure of a light control panel and an in-plane vibration unit according to one or multiple embodiments of the present disclosure.

### DETAILED DESCRIPTION OF THE DISCLOSURE

The present disclosure relates to a variable transmittance optical stack and a method for manufacturing the same, and a smart window including the same, the variable transmittance optical stack including a light control panel; an in-plane vibration unit; and a noise control unit, and the noise control unit including a noise receiving part, a noise analyzing part, and a frequency transmitting part.

More specifically, the present disclosure relates to a variable transmittance optical stack in which the in-plane vibration unit is formed in direct contact with the light control panel, the noise control unit includes a separate power supply part to allow the noise analyzing part to convert noise received through the noise receiving part of the noise control unit to its frequency, and the reverse phase frequency of the noise is transmitted through the frequency transmitting part to vibrate the in-plane vibration unit and the light control panel at the noise reverse phase frequency to reduce the noise.

Furthermore, the light control panel includes a first polarizing plate; a first transparent conductive layer formed on one surface of the first polarizing plate; a second polarizing plate opposing the first polarizing plate; a second transparent conductive layer formed on one surface of the second polarizing plate, and opposing the first transparent conductive layer; and a liquid crystal layer provided between the first transparent conductive layer and the second transparent conductive layer. As at least one of the first and second transparent conductive layers is formed by directly contacting with any one of the first and second polarizing plates, the variable transmittance optical stack of the present disclosure is particularly suitable for technical fields where transmittance of light can be changed according to by applying a voltage and, for example, may be used a smart window, etc. Moreover, the thickness of the stack is reduced significantly compared to a display device including a conventional liquid crystal layer, the effect of reducing noise with the introduction of the in-plane vibration unit can be maximized.

The smart window is an optical structure a window controlling the amount of light or heat passing through the window by changing light transmittance in response to an electrical signal. In other words, the smart window is provided to be changed into a transparent, opaque, or translucent state by a voltage and is called variable transmittance glass, light control glass, or smart glass.

The smart window may be used as partitions for partitioning an internal space of vehicles and buildings or for protecting privacy, or as skylights arranged in openings of buildings. The smart window may be used as highway signs, noticeboards, scoreboards, clocks, or advertising screens and may be used to replace windows of a means of transportation, such as cars, buses, aircrafts, ships, or trains, or glass for a sunroof window of a means of transportation.

The variable transmittance optical stack of the present disclosure may also be used for the smart window of the various technical fields mentioned above, but since the conductive layer is directly formed in the polarizing plate, there is no need to include a separate or additional substance for forming the conductive layer and the thickness thereof is thin and is advantageous in the flexuosity, so the optical stack of the present disclosure may be used to be particularly suitable for a smart window of a vehicle or a building. According to one or a plurality of embodiments, the smart window to which the variable transmittance optical stack of the present disclosure is applied may be used for front windows, rear windows, side windows, and sunroof windows of a means of transportation, i.e., a vehicle, or windows and doors for a building. Furthermore, the smart window may be used for not only an external light blocking use, but also an internal space partitioning use or a privacy protecting use such as an inner partition for a vehicle or a building, and may be used for wearable devices such as helmets, glasses, or watches.

Hereinbelow, embodiments of the present disclosure will be described in detail with reference to drawings. However, the following drawings accompanied to this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus do not limit the present disclosure. In this specification, an element expressed in a singular form may be plural elements unless it is necessarily singular in the context. For example, "the polarizing plate" used in the specification may mean at least one polarizing plate of the first polarizing plate and the second polarizing plate, and "the transparent conductive layer" may mean at least one transparent conductive layer of the first transparent conductive layer and the second transparent conductive layer.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", and "upper portion" may be used to easily describe correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" with respect to another element may be placed "on" the another element. Accordingly, the exemplary term "below" may include both downward and upward directions. An element may be aligned in a different direction, and accordingly, the spatially relative terms may be interpreted according to orientation.

As used herein, "inner" or "internal" may mean the view-point side of a main user. For example, when a variable transmittance optical stack is applied to a vehicle, it may mean the inner side of the vehicle, which is the side visible to the occupants, and when the variable transmittance optical stack is applied in a building, it may mean the inner side of the building, which is the floor visible to the occupants in the building, but it is not limited thereto. "Outer" or "external" may contrasts with the inner side and may mean the side opposite to the visible side of a main user based on the variable transmittance optical stack.

The "planar direction" used in this specification may be interpreted as a direction perpendicular to a polarizing plate and/or a transparent conductive layer, that is, a direction viewed from the user's view side.

"Substantially" used in this specification may be interpreted to include not only physically identical, but also within a range of error in measurement or manufacturing processes and, for example, it may be interpreted to be equal to or less than 0.1% of the range of error.

### <Variable transmittance optical stack and Method for manufacturing the same>

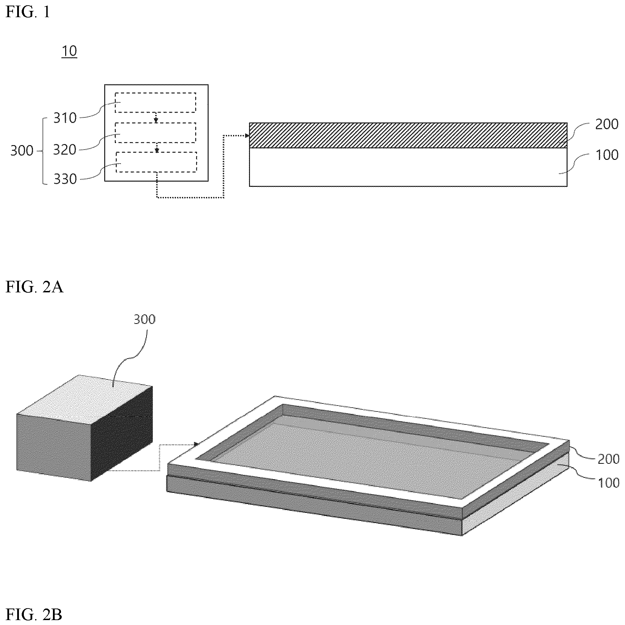

FIG. 1 is a schematic diagram illustrating a structure of a variable transmittance optical stack of the present disclosure. Referring to FIG. 1, according to an embodiment of the present disclosure, a variable transmittance optical stack 10 may include a light control panel 100, an in-plane vibration unit 200, and a noise control unit 300 connected to a separate external power supply. The noise control unit 300 may include a noise receiving part 310, a noise analyzing part 320, and a frequency transmitting part 330. The present disclosure is characterized to cancel noise controlled by the noise control unit 300 with a reverse phase frequency, which is the opposite of the noise, by vibration of the in-plane vibration unit 200. This technical characteristic of the present disclosure can be maximized with the structure with significantly reduced thickness compared to the conventional optical stack, specifically, as the conductive layer is formed directly on the polarizing plate of the light control panel 100 without a separate or additional substrate for forming the conductive layer.

### Noise control unit

Referring to FIG. 1, according to the embodiment of the present disclosure, the noise control unit 300 may include the noise receiving part 310, the noise analyzing part 320, and the frequency transmitting part 330, and additional configuration may be included without harming the purpose of the present disclosure.

The noise control unit 300 cancels and removes noise by converting external noise, which is received through the noise receiving part 310, to its frequency at the noise analyzing part 320, and allowing the frequency transmitting part 330 to transmit the reverse phase frequency thereof, and vibrating the in-plane vibration unit 200 and/or the light control panel 100 to be described below.

The noise receiving part 310 is not particularly limited as long as it is a means capable of receiving external noise and its frequency and may include one or more selected from a group consisting of a listening device and a noise sensor. Preferably, noise receiving part 310 may include a listening device and a noise sensor. The listening device is not particularly limited as long as it is a means capable of collecting external noise. For example, the listening device may be a device receiving sound delivered through external air conduction and, specifically, may be a microphone. The listening device may be provided singly or in multiples. Preferably, the listening device may be provided at the outermost part of the variable transmittance optical stack of the present disclosure to facilitate external noise collecting. When the multiple listening devices are provided, the listening devices may be arranged in different directions to collect noises in different directions. The noise sensor may be a sensor receiving noise by using a material with fast sound delivery (e.g., beryllium, etc.). Furthermore, the noise receiving part 310 of the present disclosure may include a listening device and/or a noise sensor additionally in the variable transmittance optical stack to monitor the noise reduction effect of the present disclosure.

The noise analyzing part 320 is a means of analyzing external noise received to the noise receiving part 310, and determines and delivers the noise reverse phase frequency to be transmitted from the frequency transmitting part 330. Specifically, when external noise received to the noise receiving part 310 is higher or lower than a preset noise reference, the noise analyzing part 320 may control a frequency to be transmitted to the frequency transmitting part 330 and deliver it. At this point, the external noise frequency is determined with consideration of noise direction when receiving noise, whether driving is performed, driving speed, etc. Also, the noise reverse phase frequency to be transmitted to the frequency transmitting part 330 may be determined with consideration of whether driving is performed when transmitting noise, driving speed, internal noise, etc. Furthermore, the noise analyzing part 320 of the present disclosure continues to accumulate external noise information, and may learn a change of noise by the reverse phase frequency transmitted to the frequency transmitting part 330. According to a type of external noise, to most effectively remove, control, cancel, reduce, and/or block the external noise, the noise reverse phase frequency may be corrected and transmitted to the frequency transmitting part 330.

The frequency transmitting part 330 is a means that transmits the noise reverse phase frequency received from the noise analyzing part 320, to the in-plane vibration unit. The reverse phase frequency transmitted from the frequency transmitting part 330 may range, for example, from 500 to 5000 Hz, and is not limited thereto. Specifically, the frequency transmitting part 330 stores or delivers and/or transmits reverse phase information of sound information such as pitch, tempo, rhythm, repetition pattern, etc., which is analyzed by the noise analyzing part 320. For example, the pitch of sound may be extracted and calculated by the autocorrelation method, and the cepstrum analysis method.

The noise control unit 300 is connected to the power supply part (not illustrated) that is separate from the in-plane vibration unit 200, and is operated in conjunction with opening and closing of the window to be operated when the window is closed.

### In-plane vibration unit

The in-plane vibration unit 200 cancels external noise and prevents the noise from entering by vibrating the in-plane vibration unit 200 and the light control panel 100 through the reverse phase frequency received through the noise control unit 300.

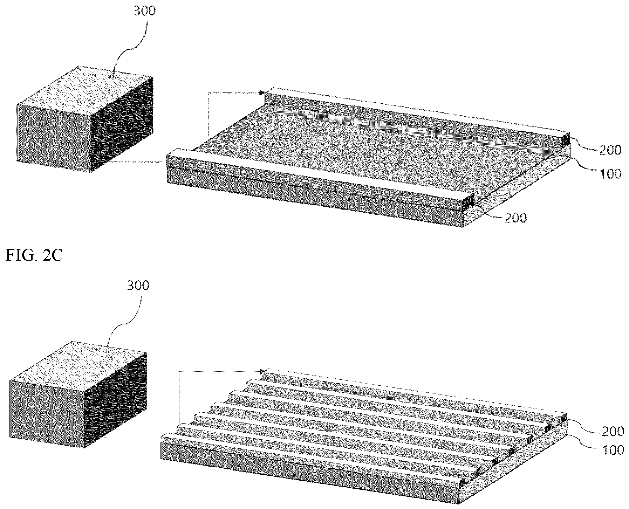

In the present disclosure, vibration for canceling external noise is realized by the light control panel by the in-plane vibration unit 200, not configuration arranged one portion or a point source of the light control panel. Therefore, the effect of removing, controlling, canceling, reducing, and/or blocking external noise can be maximized. Furthermore, in order to achieve the purpose of securing visibility and canceling external noise in the light control area, a vibrator is most preferably located at an edge of the panel, but it is not limited thereto. For example, when a film-type in-plane vibration unit is used, such as n electrode is coated on polyvinylidene fluoride (PVDF) to be vibrated using a transparent piezoelectric device, the arrangement of a patterned as illustrated in FIG. 2C and/or the arrangement deformed therefrom are possible.

Referring to FIGS. 2A and 2B, in the present disclosure, the in-plane vibration unit 200 may be arranged at the peripheral part of the light control panel 100.

As described below, the in-plane vibration unit may be formed of a polymer film, and the polymer film may be an opaque, so it is preferable for a center portion thereof to be open to the light control panel to secure visibility. In other words, as illustrated in FIG. 2A, the in-plane vibration unit may be provided around the peripheral part of four surfaces of the light control panel to be described or on at least one edge. As illustrated in FIG. 2B, the in-plane vibration unit may be arranged at both peripheral parts of two surfaces of the light control panel, and the form with open central portion is not limited thereto. Furthermore, when the in-plane vibration unit is transparent (for example, a film-type speaker using a transparent PVDF), the in-plane vibration unit may be arranged in a horizontally or vertically patterned in a plane as shown in FIG. 2C.

The in-plane vibration unit may include a film transmitting the reverse phase frequency. It is not particularly limited, as an example, the in-plane vibration unit may consist of at least one type of polymer film selected from a group consisting of polyester (PET), polycarbonate (PC), polyethylene naphthalate (PEN), polyether ether ketone (PEEK), polypropylene (PP), polymethylpentene (TPX), polyimide (PI), polyetherimide (PEI), liquid crystal polymers (LCP), and polyvinylidene fluoride (PVDF).

The film capable of transmitting the noise reverse phase frequency may be a single layer or two or more layers on its purpose. As an example, as equivalent or different polymer films are stacked in multiple layers, the film may be designed to improve vibration damping.

Furthermore, a diaphragm material may be included on one surface of both surfaces of the film capable of emitting the noise reverse phase frequency, and as an example, the diaphragm material may be aluminum.

The in-plane vibration unit of the present disclosure or the method for manufacturing the same may use known contents about a means capable of emitting frequencies in addition to the above-described description, without limitations in the range of purposes of the present disclosure. Furthermore, the vibration frequency through the in-plane vibration unit is not limited as long as it is in a range without interference. However, noise in a frequency band ranging from 500 to 5000 Hz, which is the frequency range emitted through the frequency transmitting part 330 of the noise control unit 300, may be removed.

When the area of the in-plane vibration unit ranges from 5 to 30 % of the whole area of the light control panel, it is preferable in that noise can be efficiently reduced and a wide light control region can be secured. When the area of the in-plane vibration unit is smaller than 5% of the whole area of the light control panel, it is difficult to sufficiently secure the desired reverse phase vibration generation effect. When the area is greater than 30%, transmittance in the light control region is reduced and the occupant's vision may be obstructed.

### Light control panel

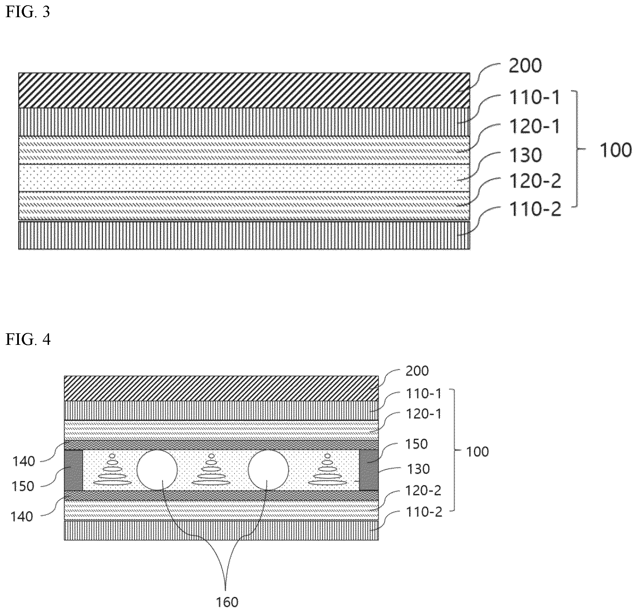

FIGS. 3 and 4 are sectional views illustrating a stack structure of a light control panel and an in-plane vibration unit in detail according to one or multiple embodiments of the present disclosure. The light control panel 100 of the present disclosure is formed without a separate or additional substrate for forming a conductive layer, as the conductive layer is directly formed on one surface of the polarizing plate, so the thickness thereof is significantly reduced in comparison to the conventional optical stack. Accordingly, the in-plane vibration unit 200 vibrates with the reverse phase frequency opposite to noise, thereby efficiently removing, controlling, cancelling, reducing, and/or blocking external noise.

Referring to FIGS. 3 and 4, the light control panel 100 includes a first polarizing plate 110-1; a first transparent conductive layer 120-1 formed on one surface of the first polarizing plate; a second polarizing plate 110-2 opposing the first polarizing plate; a second transparent conductive layer 120-2 formed on one surface of the second polarizing plate and opposing the first transparent conductive layer; and a liquid crystal layer 130 provided between the first transparent conductive layer and the second transparent conductive layer, and at least one of the first and second transparent conductive layers is formed by directly contacting with one of the first and second polarizing plates. Therefore, a transmittance can be adjusted by applying a voltage. Furthermore, as illustrated in FIGS. 3 and 4, the above-described in-plane vibration unit 200 may be formed on one surface of the light control panel 100, and may be applied without a limitation of inside part or outside part based on a direction of sight. However, it is preferable to locate the in-plane vibration unit 200 at the inside part in terms of the in-plane vibration unit 200 being closer to the user's ear, which can reduce noise efficiently.

Furthermore, the light control panel 100 may include one or more types selected from a group consisting of a pressure sensitive adhesive/adhesive layer (not illustrated), an ultraviolet ray absorption layer (not illustrated), and an impact resistance layer (not illustrated). The liquid crystal layer 130 may include an alignment film 140 and a sealant 150.

### Polarizing plate

The polarizing plate 110 includes a polarizer, and at least one of the first and second polarizing plates 110-1 and 110-2 may include a functional layer such as a functional coating layer, a protective layer, a retardation matching layer, and/or a refractive index-matching layer. For example, the polarizing plate may include the polarizer, and the protective layer stacked on one surface or both surfaces of the polarizer. The polarizing plate may include the polarizer, the protective layer stacked on a first surface of the polarizer, and the retardation matching layer stacked on a second surface of the polarizer which is opposite to the first surface. The polarizing plate may include the polarizer, the protective layer stacked on a first surface of the polarizer, and the retardation matching layer and the refractive index-matching layer successively stacked on a second surface of the polarizer which is opposite to the first surface. The polarizing plate may include the polarizer, the protective layer stacked on a first surface of the polarizer, and the protective layer and the retardation matching layer successively stacked on a second surface of the polarizer which is opposite to the first surface.

The polarizer may use polarizers currently developed or to be developed, and may use, for example, a stretched polarizer or a coated polarizer.

According to the embodiment, the stretched polarizer may include a stretched polyvinyl alcohol (PVA)-based resin. The PVA-based resin may be PVA-based resin obtained by saponifying polyvinyl acetate resin. In addition to polyvinyl acetate that is homopolymer of vinyl acetate, vinyl acetate and a copolymer with other monomers that can be copolymerized with vinyl acetate may be used as the polyvinyl acetate-based resin. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin includes a denatured resin, and for example, may be polyvinyl formal or polyvinyl acetal denatured into aldehyde.

According to the embodiment, the coated polarizer may be formed of a composition for liquid crystal coating, and, at this point, the composition for liquid crystal coating may contain reactive liquid crystal compound, and dichroic dye, etc.

The reactive liquid crystal compound may mean a compound, for example, containing a mesogen frame, etc., and containing one or more polymerizable functional groups. The reactive liquid crystal compound may be variously known by the name reactive mesogen (RM). The reactive liquid crystal compound may constitute a cured film with polymer network formed while being polymerized by light or heat and maintaining liquid crystal arrangement.

The reactive liquid crystal compound may be a mono-functional liquid crystal compound or a multi-functional liquid crystal compound. The mono-functional liquid crystal compound is a compound having 1 polymerizable functional group, and the multi-functional liquid crystal compound may be a compound having two or more polymerizable functional groups.

The dichroic dye is a substance contained in the composition for liquid crystal coating to impart the polarization characteristic, and has a property in which absorbance in a direction of long axis of molecule and absorbance in a direction of short axis are different. The dichroic dyes may adopt dichroic dyes currently developed or to be developed, and may contain one or more types of dyes selected from a group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like. Furthermore, the composition for liquid crystal coating may contain leveling agents, polymerization initiators, etc. within a range that does not deteriorate the polarization characteristics of a coating film.

(2155)The functional coating layer may be provided to improve hardness of the polarizing plate 110 and, for example, may include an overcoat layer and/or a hard coating layer to improve the mechanical durability.

The hard coating layer may use a hard coating layer currently developed or to be developed, and according to one or multiple embodiments, the hard coating layer may be manufactured using a hard coating composition. The composition may include acrylic compound or epoxy compound, and include inorganic microparticle, photoinitiator, etc.

The acrylic compound may include monomer or oligomer including (meth) acrylate-group, and the term used in the specification, "(meth)acryl-" is used to refer to "methacryl-", "acryl-" or both.

The acrylic compound may include monomer or oligomer including (meth) acrylate-group, and the term used in the specification, "(meth)acryl-" is used to refer to "methacryl-", "acryl-" or both. As non-restricted examples of the acrylic compound, there may be neopentylglycol diacrylate, 1,6-hexanediol (meth) acrylate, polypropyleneglycoldi (meth) acrylate, triethyleneglycoldi (meth) acrylate, dipropyleneglycoldi (meth) acrylate, polyethyleneglycoldi (meth) acrylate, polypropyleneglycoldi (meth) acrylate, trimethylolpropanetri (meth) acrylate, trimethylolethanetri (meth) acrylate, 1,2,4-cyclohexanetetra (meth) acrylate, pentaglycerolthri (meth) acrylate, pentaerythritoltetra (meth) acrylate, pentaerythritoltri (meth) acrylate, dipentaerythritoltri (meth) acrylate, dipentaerythritolpenta (meth) acrylate, dipentaerythritoltetra (meth) acrylate, dipentaerythritolhexa (meth) acrylate, tripentaerythritoltri (meth) acrylate, tripentaerythritolhexatri (meth) acrylate, bis (2-hydroxyethyl)isocyanuratedi (meth) acrylate, hydroxyethyl (meth) acrylate, hydroxypropyl (meth) acrylate, hydroxybutyl (meth) acrylate, isooctyl (meth) acrylate, isodecyl (meth) acrylate, stearyl (meth) acrylate, tetrahydrofurfuryl (meth) acrylate, phenoxyethyl (meth) acrylate, isobonyl (meth) acrylate, etc. The solvents may be used alone or combination of two or more types. The acrylic compound may contain an epoxy (meth) acrylate compound and/or a urethane (meth) acrylate compound.

Furthermore, the epoxy compound may contain a monomer with at least one epoxy group in a molecule or an oligomer. The epoxy group may be an alicyclic epoxy group. The carbon number of an alicyclic ring included in the epoxy group may be between 3 and 7, and for example, may be alicyclic epoxy group containing a cyclohexane ring (cyclohexylepoxy). The alicyclic ring may have a substituent. For example, the alicyclic ring may include an alkyl substituent having 1 to 20 carbon atoms. When the carbon number of the alkyl substituent exceeds 20, it may be disadvantageous in terms of curing speed. The alkyl substituent may include a straight-chain type or a branched type, and in the case of the branched type, the carbon number may be 10 or more.

In a manufacturing method of the hard coating layer of the present disclosure, the hard coating composition may contain an inorganic microparticle. According to the embodiment of the present disclosure, the inorganic microparticle may use an inorganic microparticle, which has a nanoscale particle size, and for example, may use a nanoparticle with a particle size of 100nm or less, preferably between 10 and 100nm, more preferably between 10 and 50nm. Furthermore, for example, the inorganic microparticle may use silica microparticle, aluminum oxide particle, titanium oxide particle, zinc oxide particle, or the like. As the inorganic microparticle is contained, the hardness of the hard coating layer can be further improved. According to the embodiment of the present disclosure, the inorganic microparticle may be contained as between 10 and 60 parts by weight with respect to the total weight of the hard coating composition, preferably as between 20 and 50 parts by weight. As the inorganic microparticles are included as the above-described range, it is possible to achieve the effect of improving hardness of the hard coating layer by adding the inorganic microparticles without deteriorating the physical properties of the hard coating composition.

In the manufacturing method of the hard coating layer of the present disclosure, the hard coating composition may contain an optical initiator. According to an embodiment of the present disclosure, the optical initiator may be 1-hydroxycyclohexyl-phenylketone, 2-hydroxy-2-methyl-1-phenyl-1-propanone, 2-hydroxy-1-[4-(2-hydroxyethoxy)phenyl]-2-methyl-1 -propanone, methylbenzoylformate, α,α-dimethoxy-α-phenylacetophenone, 2-benzoyl-2-(dimethylamino)-1 -[4-(4-morpholineyl)phenyl]-1-butanone, 2-methyl-1-[4-(methylthio)phenyl]-2-(4-morpholineyl)-1-propanonediphenyl(2,4,6-trimethylbenzoyl)-phosphineoxide or bis(2,4,6-trimethylbenzoyl)-phenylphosphineoxide, etc., but is not limited thereto. Furthermore, currently available products may include Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F, etc. The optical initiator may be used alone or as two different types are mixed.

According to the present disclosure, the optical initiator may be contained as between 0.5 and 10 % by weight with respect to the total weight of the hard coating composition, particularly, between 1 and 5 % by weight. When the optical initiator is within the above range, sufficient cross-linking photopolymerization can be achieved without deteriorating physical properties of the hard coating layer.

Meanwhile, in a manufacturing method of the hard coating layer of the present disclosure, in addition to the above-described components, the hard coating composition may include additives commonly used in the technical field to which the present disclosure belongs, such as a surfactant, a yellowing inhibitor, a leveling agent, an antifouling agent, etc. Furthermore, the content may be variously adjusted within a range that does not deteriorate the physical properties of the hard coating composition according to the present disclosure, and is not particularly limited.

The low refractive index layer may be provided to also improve the hardness of the polarizing plate within a range that does not impair the objectives of the present disclosure. The low refractive index layer, for example, may include one or more low refractive index agents selected from a group consisting of SiO2, Al2O3, MgF2, CaF, cryloite, etc., and in some embodiments, may include a compound and/or resin used in the hard coating layer.

The hard coating layer and the low refractive index layer may be each used alone, and in some embodiments, may be used as a multiple-layered structure. The functional coating layer may be formed by directly contacting with one surface of the polarizer, but is not limited thereto. For example, when the polarizing plate includes the retardation matching layer and/or the refractive index-matching layer, the functional coating layer may be formed on one surface of the retardation matching layer and/or the refractive index-matching layer to be described below, so that the functional coating layer, the retardation matching layer, the refractive index-matching layer, and the polarizer may be stacked in order. The functional coating layer is preferably formed on a side toward the liquid crystal layer of the polarizer, i.e., on an inner side of the polarizer and, for example, the first functional coating layer and the second functional coating layer are provided at the inner side of the first polarizer and the second polarizer and arranged to face each other. In this case, the functional coating layer imparts hardness enough to form a member such as the transparent conductive layer at the polarizing plate, so there is the advantage of minimizing cracks or scratches occurring in the manufacturing or processing of the optical stack. In addition, there is the advantage of reducing the thickness of the sealant as the functional coating layer may efficiently suppress pressing to a surface of a substrate due to the sealant.

The protective layer is provided to preserve the polarization characteristic of the polarizer from a post-processing and external environment, and may be implemented into a form such as a protective film, etc. The protective layer may be formed by directly contacting with one or opposite surfaces of the polarizer, but is not limited thereto. For example, the protective layer may be used as a double layer structure in which one or more protective layers are successively stacked, and may be formed in directly contact with another functional layer.

According to one or a plurality of embodiments, the protective layer may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP). The thickness of the protective layer may be between 10 and 100µm and, preferably, between 20 to 80µm.

Furthermore, the protective layer may include an ultraviolet absorber at the outermost surface thereof in order to prevent functional deterioration of the optical stack. The ultraviolet absorber is not particularly limited as long as it is to prevent deterioration of the optical stack due to UV rays. For example, the ultraviolet ray absorption layer may use salicylic acid-based ultraviolet absorber (phenyl salicylate, p-tert-butylsalicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc. The benzotriazole-based ultraviolet absorber or the triazine-based ultraviolet absorber that have high transparency and the excellent effect of preventing deterioration of the polarizing plate or the variable transmittance layer may be preferably used as the ultraviolet ray absorption layer, and the benzotriazole-based ultraviolet absorber having more appropriate spectral absorption spectroscopy absorption spectrum may be preferable. The benzotriazole-based ultraviolet absorber may be changed into "-Bis" and, for example, may be 6,6'-methylenebis(2-(2H-benzo[d][1,2,3]triazole-2-yl)-4-(2,4,4-trimethylpentane-2-yl)phenol), 6,6'-methylenebis(2-(2H-benzo[d][1,2,3]triazole-2-yl)-4-(2-hydroxyethyl)phenol), etc.

The retardation matching layer may be provided to complement optical properties of the optical stack, and may be implemented in a retardation film, and a retardation film currently developed or to be developed may be used therefor. For example, a quarter-wave plate (1/4 wave plat) or a half-wave plate (1/2 wave plat) may be used to delay a phase difference of light, and may be used alone or in combination. The retardation matching layer may be formed by directly contacting with one surface of the polarizer, but is not limited thereto. For example, the retardation matching layer is formed on one surface of the protective layer, and the polarizer, the protective layer, and the retardation matching layer may be stacked in order.

The retardation matching layer may be a polymer stretched film or a liquid crystal polymerized film, formed by stretching a polymer film that can impart optical anisotropy by stretching in an appropriate manner. According to the embodiment, the polymer stretched film may use a polymer layer including: polyolefin such as polyethylene (PE), polypropylene (PP), etc.; cyclo olefin polymer (COP) such as polynorbornene, etc.; polyester such as polyvinyl chloride (PVC), polyacrylonitrile (PAN), polysulfone (PSU), acryl resin, polycarbonate (PC), polyethylene terephthalate (PET), etc.; cellulose ester polymer such as polyacrylate, polyvinyl alcohol (PVA), triacetyl cellulose (TAC), etc.; and/or a copolymer of two or more monomers among monomers that can form the polymers.

An obtaining method of the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using common solvent, for example, solvent such as chloroform, 2 methylen chloride, and then is solidified in a cast dry manner, and accordingly the non-stretched film may be cast-molded.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain a reactive liquid crystal compound in a polymerized state. The description of the reactive liquid crystal compound of the coated polarizer described above may be equally applied to the reactive liquid crystal compound.

According to one or a plurality of embodiments, when the retardation matching layer is a polymer stretched film, a thickness thereof may be between 10 and 100 µm, and when the retardation matching layer is a liquid crystal polymerized film, a thickness thereof may be between 0.1 and 5µm.

The refractive index-matching layer is provided to compensate for the refractive index difference of the optical stack by the transparent conductive layer to be described below, and may serve to improve the visible characteristic by reducing the difference of the refractive index. Furthermore, the refractive index-matching layer may be provided to correct a color based on the transparent conductive layer 120 to be described below. Meanwhile, when the transparent conductive layer has a pattern, the refractive index-matching layer may correct the transmittance difference between a region with the pattern and a non-pattern region without the pattern. Specifically, the transparent conductive layer 120 is stacked close to other members having a refractive index different therefrom (e.g., polarizer, etc.), and due to the difference of the refractive index between the transparent conductive layer and another layer close thereto, the difference of optical transmittance may be caused. Specifically, when the pattern is formed on the transparent conductive layer, there may be a problem in that the pattern region and the non-pattern region are visually distinguished from each other. Therefore, the refractive index-matching layer is included to compensate for refractive index, thereby reducing the difference of the optical transmittance of the optical stack. Specifically, when the pattern is formed on the transparent conductive layer, the pattern region and the non-pattern region should be provided so as not to be visually distinguished. According to the embodiment, the refractive index of the refractive index-matching layer may be appropriately selected according to a material of another adjacent member, and may be preferably between 1.4 and 2.6, more preferably, may be between 1.4 and 2.4. In this case, it is possible to prevent optical loss due to a sharp refractive index difference between another member such as the polarizer and the transparent conductive layer 120. The refractive index-matching layer is not particularly limited as long as it can prevent the sharply refractive difference between other members such as the polarizer, etc. and the transparent conductive layer. The refractive index-matching layer may use a compound used in the formation of refractive index-matching layers currently developed or to be developed. For example, the refractive index-matching layer 150 may be formed from refractive index-matching layer formation composition including polymerizable isocyanate compound.

According to one or multiple embodiments, the polarizing plate 110 may include other configurations to assist or strengthen the characteristics of the polarizing plate in addition to the above-mentioned configuration. For example, the polarizing plate 110 may include an overcoat layer, etc. to further improve the mechanical durability. According to one or a plurality of embodiments, the polarizing plate 110 may have a thickness between 30 and 200 µm, and preferably, a thickness between 30 and 170 µm, and more particularly, a thickness between 50 and 150 µm. In this case, while the polarizing plate 110 maintains the optical characteristic, the optical stack having a thin thickness can be manufactured.

### Transparent conductive layer

The transparent conductive layer 120 is provided to drive the liquid crystal layer 130 and may be formed by directly contacting with the polarizing plate 110. For example, as shown in FIGS. 3 and 4, the first transparent conductive layer 120-1 and the second transparent conductive layer 120-2 may be respectively formed by directly contacting with the first polarizing plate 110-1 and the second polarizing plate 110-2.

Conventionally, a light control optical stack used to manufacture a smart window, etc. is manufactured by forming a conductive layer for driving a liquid crystal on a first surface of a substrate and bonding a second surface of the substrate to a polarizing plate. However, according to the present disclosure, the variable transmittance optical stack 10 has the conductive layer directly formed on one surface of the polarizing plate without a separate or additional substrate for forming the conductive layer, and thus is characterized to improve the transmittance in the light transmissive mode and the curvature characteristic while reducing the entire thickness of the stack. Furthermore, the light control panel 100 of the present disclosure is formed without a separate or additional substrate for forming a conductive layer, as the conductive layer is directly formed on one surface of the polarizing plate, so the thickness thereof is significantly reduced in comparison to the conventional optical stack. Accordingly, the in-plane vibration unit 200 vibrates with the reverse phase frequency opposite to noise, thereby efficiently removing, controlling, cancelling, reducing, and/or blocking external noise.

According to the embodiment, the transparent conductive layer 120 may be formed by being directly deposited on one surface of the polarizing plate 110. At this point, in order to improve the adhesion between the transparent conductive layer 120 and the polarizing plate 110, the transparent conductive layer 120 may be formed by performing pre-processing such as a corona processing or a plasma processing on one surface of each polarizing plate 110, and then directly contacting with the surface of each polarizing plate to which the pre-processing is performed. The pre-processing is not limited to the corona processing or the plasma processing, and may adopt a pre-processing currently developed or to be developed without harming the purpose of the present disclosure.

According to another embodiment, in order to improve the adhesion between the transparent conductive layer 120 and the polarizing plate 110, the transparent conductive layer 120 may be formed by directly contacting with each polarizing plate 110 with the highly adhesive layer (not illustrated) located therebetween, the highly adhesive layer being provided on one surface of the polarizing plate 110.

The transparent conductive layer 120 is preferably have the transmittance with respect to visible light of 50% or more, and for example, may include one or more types selected from a group consisting of transparent conductive oxide, metal, a carbonaceous material, conductive polymer, conductive ink, and nanowires, but the present disclosure is not limited thereto, and a material of a transparent conductive layer currently developed or to be developed may be used.

Specifically, according to one or multiple embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous matter may include one or more types selected from a group consisting of carbon nanotube (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the conductive layer may be formed by combining these matters in a structure of two or more layers. For example, the conductive layer includes a double layered structure of a metal layer and a metal layer and a transparent conductive oxide layer, and may reduce the reflectance of incident light and increase the transmittance. When the metal layer with a high reflectance is used alone, the visibility of the display may be deteriorated, but as the transparent conductive oxide layer is stacked, the reflectance may be reduced and the transmittance may be improved.

The transparent conductive layer 110-2, 120-2 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as in-mold labeling (IML) injection method and chemical vapor deposition (CVD), physical vapor deposition (PVD), plasma enhanced chemical vapor deposition (PECVD) , etc., and a plating process such as a dry method and a wet method.

### Liquid crystal layer

The liquid crystal layer 130 may adjust transmittance of light incident in one or a plurality of directions according to electric fields to change a driving mode of the optical stack. The liquid crystal layer 130 may include liquid crystal compounds and spacers, for example, in an optical control region as illustrated in FIG. 4, the liquid crystal layer 130 may be located in a space provided by a sealant 150 and a spacer 160 that are provided between the first polarizing plate 110-1 and the second polarizing plate 110-2. Furthermore, when necessary, the liquid crystal layer 130 may include the alignment film 140. The alignment film 140, for example, may be formed on both surfaces of the liquid crystal layer 130 including liquid crystal compounds.

The liquid crystal compounds are driven in response to electric fields and is not particularly limited as long as it can control transmittance of light, and liquid crystal compounds currently developed or to be developed may be used and, for example, the description of reactive liquid crystal compound of the above-mentioned coated polarizer may be equally applied thereto.

The liquid crystal driving method of the liquid crystal layer 130 is not particularly limited, for example, may be operated in the twisted nematic 9-(TN) mode. However, in addition to the TN mode, the liquid crystal driving method may include a super twisted nematic (STN) mode, a vertical alignment (VA) mode, and an electrically controlled birefringence (ECB) mode, etc.

The alignment film 140 is not particularly limited as long as it can provide orientation to a liquid crystal compound. Preferably, the alignment film 140 may include photoaligned polymers or photocurable polymers. For example, the alignment film 140 may be manufactured by applying and curing an alignment film coating composition including photoaligned polymers or photocurable polymers, photopolymerization initiators, and solvent.

The photoaligned polymers or photocurable polymers are not particularly limited and may use cinnamate series polymers, polyimide series polymers, etc.. For example, photoaligned polymers or photocurable polymers may be poly(vinyl cinnamate)(PVCi), poly(siloxane cinnamate)(PSCN), poly(co(4-chalconyloxy)alkoxyphenylmaleimide), 6-FDA-HAB-Cl, etc., and may be polymers currently developed or to be developed which is capable of expressing orientation.

The sealant 150 is located between the first polarizing plate 110-1 and the second polarizing plate 110-2 in an inactivate region and couples the first polarizing plate and the second polarizing plate to each other. The sealant 150 may be provided to secure a space, with the spacer, where the liquid crystal layer 130 is provided between the first polarizing plate 110-1 and the second polarizing plate 110-2.

The sealant 150 may include curable resins as base resins. As the base resins, UV curable resins or heat curable resins that are known to be usable for sealants in the art may be used. The ultraviolet curable resins may be polymers of UV curable monomers. The heat curable resins may be polymers of heat curable monomers. As the base resins of the sealant 150, for example, acrylate-based resins, epoxy-based resins, urethane-based resins, phenol-based resins, or compounds of these resins. According to an embodiment, the base resins may be acrylate-based resins, and the acrylate-based resins may be polymers of acrylic monomers. For example, the acrylic monomers may be multifunctional acrylate. According to another embodiment, the sealant may include monomer substances in addition to the base resins. For example, the monomer substances may be monofunctional acrylate. In the specification, the monofunctional acrylate may mean compounds having one acryl group, and the multifunctional acrylate may mean compounds having two or more acryl group. The curable resins may be cured by UV irradiation and/or heating. The UV irradiation condition or heat condition may be performed appropriately within the scope that does not damage the objective of the present disclosure. In case of need, the sealant may include initiators, for example, optical initiators or heat initiators.

The sealant 150 may be provided in a method commonly used in the art and, for example, may be formed drawing a sealant at an outer portion of the liquid crystal layer (i.e., inactivate region) with a dispenser having a nozzle.

The sealant may preferably have a height after curing substantially equal to the height of the liquid crystal layer. For example, the sealant may have a height between 1 and 20µm and more preferably a height between 1 to 10µm. In this case, leakage of light from a portion of the liquid crystal layer adjacent to the sealant can be prevented, and the reliability of the spacer can be improved.

The spacer 160 may maintain a liquid crystal gap of the liquid crystal layer constant. The spacer 160 may include at least one selected from a group consisting of a ball spacer and a column spacer. Specifically, as shown in FIG. 4, it is preferable that the spacer 160 may be a ball spacer. One or more spacers may be provided. The spacer with a height between 1 to 20 µm or preferably a height between 1 to 10µm is advantageous in supporting the liquid crystal layer. Furthermore, when viewed in a planar direction, an area occupied by the spacer in the liquid crystal layer 130 is preferably between 0.01 to 10% to the area of the liquid crystal layer 130 in terms of improvement of the transmittance in the transmissive mode and the user's visibility.

### Other functional layers

The variable transmittance optical stack of the present disclosure may include other members without harming the objectives of the present disclosure. For example, the variable transmittance optical stack may include the pressure sensitive adhesive/adhesive layer, or may include an ultraviolet ray absorption layer, an impact resistance layer.

The pressure sensitive adhesive/adhesive layer may be formed using an adhesive or a pressure sensitive adhesive, and have appropriate adhesion to prevent peeling, bubbles, etc. from occurring when handling the optical stack, preferably have transparency and thermal stability, and include viscoelasticity applicable to the smart window. The adhesive may adopt an adhesive currently developed or to be developed, for example, may use photocurable adhesive. The photocurable adhesive provides strong adhesion by being crosslinked and cured by receiving active energy rays such as ultraviolet (UV), electron beam (EB), etc., and may be composed of reactive oligomers, reactive monomers, photopolymerization initiators, and the like. The reactive oligomers are important components that determine the properties of adhesive, and form polymer binding by photopolymerization to form a cured film. The available oligomers may be polyester-based resin, polyether-based resin, polyurethane-based resin, epoxy-based resin, polyacryl-based resin, silicon-based resin, and the like. The reactive monomers may serve as crosslinker, diluent of the reactive oligomers described above, and affect adhesion characteristics. The available reactive monomers may be monofunctional monomers, multifunctional monomers, epoxy-based monomers, vinyl ethers, cyclic ethers, and the like. The photopolymerization initiator may absorb light energy to generate radicals or cations to initiate photopolymerization, and a proper kind may be selected and used depending on photopolymerization resin. The pressure sensitive adhesive may use a pressure sensitive adhesive currently developed or to be developed. According to one or a plurality of embodiments, as the pressure sensitive adhesive, acrylic-based pressure sensitive adhesive, rubber-based pressure sensitive adhesive, silicon-based pressure sensitive adhesive, urethane-based pressure sensitive adhesive, polyvinyl alcohol-based pressure sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like.

The pressure sensitive adhesive is not particularly limited as long as it has pressure sensitive adhesion and viscoelasticity. For ease of acquisition, preferably, the pressure sensitive adhesive may include acrylic-based pressure sensitive adhesive, for example, may be (meth) acrylate copolymers, crosslinkers, solvents, and the like. The crosslinkers may adopt crosslinkers currently developed or to be developed and, for example, polyisocyanate compounds, epoxy resins, melamine resins, urea resins, dialdehydes, methylol polymers, etc., and may preferably include polyisocyanate compounds. The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure sensitive adhesive/adhesive layer may be appropriately determined depending on a type of resins serving as the pressure sensitive adhesive/adhesive, the strength of the pressure sensitive adhesive/adhesive, the environment where the pressure sensitive adhesive/adhesive is used, and the like. According to the embodiment, to secure enough pressure sensitive adhesion/adhesion and minimize the thickness of the optical stack, the pressure sensitive adhesive/adhesive layer has a thickness, in case of an adhesive layer, ranging from 0.1 to 500µm, preferably from 0.5 450µm, and more preferably, from 1 to 400µm, and in case of an pressure sensitive adhesive layer, ranging from 2 to 30µm, preferably, from 3 to 20µm, and more preferably, from 5 to 10µm. According to the embodiment, the pressure sensitive adhesive/adhesive layer may be formed on one surface of both surfaces of the polarizing plate by a laminate or vacuum coupling method.

The ultraviolet ray absorption layer (not illustrated) is not particularly limited as long as it can prevent deterioration of the optical stack due to ultraviolet rays, and the description for the ultraviolet absorber which is described in the protective layer may be equally applied thereto, so description will be omitted.

The impact resistance layer (not illustrated) is located indoors. The impact resistance layer is not particularly limited as long when an impact is applied to a front surface of the window it can reduce the effect and prevent a damage to internal substrate. Preferably, the impact resistance layer may be made of a material with a high ability of accepting strain energy, for example, thermoplastic resin with high toughness. As this resin, for example, polycarbonate series resin, polyimide series resin, polyamide series region, polyamideimide series resin, polyester series resin, etc. may be used. Furthermore, the present disclosure is intended to be used in a display device, and a resin with excellent transmissive, preferably, a resin transparent optically may be used.

### <Smart window>

In addition to the variable transmittance optical stack, the present disclosure includes a smart window including the same. Furthermore, the present disclosure includes a vehicle in which the smart window is applied to at least one of front windows, rear windows, side windows, sunroof windows, and inner partitions, and a building window including the smart window.

For example, in a vehicle including the smart window of the present disclosure, a glass for vehicle (not illustrated) may be bonded on both surfaces of the light control panel including the polarizing plate 110, the transparent conductive layer 120, the liquid crystal layer 130, and the pressure sensitive adhesive/adhesive layer (not illustrated). For example, in a vehicle including the smart window of the present disclosure, an adhesive film and a glass for vehicle are placed on both surfaces of the light control panel and then heat the layer for 10 to 20 minutes at a temperature of 90°C and vacuum of 1bar by using a press machine. The adhesive film may include an EVA film, a PVB film, etc., and a variable transmittance optical stack may be formed by bonding the in-plane vibration unit on the glass. Furthermore, smart window products for windows and doors may be manufactured such that a window or a door for a building may be bonded on the both surface or one surface of the optical stack, and an UV adhesive is applied on the both surfaces of the optical stack and then a glass for window is bonded and cured, and the layer is UV-cured, or a glass for windows and doors is bonded on one surface of the optical stack by a laminating method.

Otherwise, the smart window may be applied to means of transportation and wearable devices commonly used in the art.

## Claims

1. A variable transmittance optical stack comprising:
a light control panel;
an in-plane vibration unit; and
a noise control unit,
wherein the noise control unit comprises a noise receiving part, a noise analyzing part, and a frequency transmitting part.

2. The variable transmittance optical stack of claim 1, wherein noise transmitted through the noise receiving part of the noise control unit is converted to its frequency in the noise analyzing part, and a reverse phase frequency thereof is transmitted through the frequency transmitting part to vibrate the in-plane vibration unit and the light control panel to cancel noise, thereby being used to reduce external noise.

3. The variable transmittance optical stack of claim 2, wherein the reverse phase frequency transmitted from the frequency transmitting part ranges from 500 to 5000 Hz.

4. The variable transmittance optical stack of one of claims 1 to 3, wherein the in-plane vibration unit includes at least one type of polymer material selected from polyester (PET), polycarbonate (PC), polyethylenenaphthalate (PEN), polyether ether ketone (PEEK), polypropylene (PP), polymethylpentene (TPX), polyimide (PI), polyetherimide (PEI), liquid crystal polymers (LCP), and polyvinylidene fluoride (PVDF).

5. The variable transmittance optical stack of one of claims 1 to 4, wherein the in-plane vibration unit is arranged at a peripheral part of the light control panel.

6. The variable transmittance optical stack of claim 5, wherein the area of the in-plane vibration unit ranges from 5 to 30 % of the whole area of the light control panel.

7. The variable transmittance optical stack of one of claims 1 to 6, wherein the noise control unit is connected to a power supply part separate from the in-plane vibration unit and is configured to be operated when a window is closed, in conjunction with opening and closing of the window.

8. The variable transmittance optical stack of claim 1, wherein the light control panel comprises:
a first polarizing plate;
a first transparent conductive layer formed on one surface of the first polarizing plate;
a second polarizing plate opposite to the first polarizing plate;
a second transparent conductive layer formed on one surface of the second polarizing plate and opposite to the first transparent conductive layer; and
a liquid crystal layer provided between the first transparent conductive layer and the second transparent conductive layer,
wherein at least one of the first and second transparent conductive layers is formed by directly contacting with one of the first and second polarizing plates.

9. The variable transmittance optical stack of claim 8, wherein at least one of the first and second transparent conductive layers includes one or more types selected from a group consisting of transparent conductive oxide, metal, carbonaceous matter, conductive polymers, conductive ink, and nanowires.

10. The variable transmittance optical stack of one of claims 8 or 9, wherein at least one of the first and second transparent conductive layers is formed by directly contacting with one of the first and second polarizing plates without a separate or additional substrate therebetween.

11. The variable transmittance optical stack of one of claims 8 to 10, wherein at least one of the first and second transparent conductive layers is formed by directly contacting with one of the first and second polarizing plates with a highly adhesive layer therebetween.

12. The variable transmittance optical stack of one of claims 8 to 11, wherein at least one of the first and second polarizing plates comprises one or more types selected from a group consisting of a functional coating layer, a protective layer, a retardation matching layer, and a refractive index-matching layer.

13. The variable transmittance optical stack of one of claims 8 to 12, wherein at least one of the first and second polarizing plates has a thickness ranging from 30µm to 200µm.

14. The variable transmittance optical stack of one of claims 8 to 13, wherein the light control panel further comprises one or more types selected from a group consisting of a pressure sensitive adhesive/adhesive layer, an ultraviolet ray absorption layer, and an impact resistance layer.

15. The variable transmittance optical stack of one of claims 8 to 14, wherein the liquid crystal layer comprises one or more types selected from a group consisting of a ball spacer and a column spacer.
